# EUROPEAN PATENT APPLICATION

(11) **EP 4 502 534 A1**
(43) Date of publication of application: **05.02.2025**
(21) Application number: 23779098.5
(22) Date of filing: 24.02.2023
(51) Int. Cl.: G01B 11/25, G01B 11/245, G01C 3/06

(54) **INFORMATION PROCESSING DEVICE, INFORMATION PROCESSING METHOD, AND INFORMATION PROCESSING PROGRAM**

(30) Priority: 30.03.2022 JP 2022056992
(71) Applicant: Sony Group Corporation, Tokyo 108-0075 (JP)
(72) Inventor: ENDO, Sora, Tokyo 108-0075 (JP)
(74) Representative: 2SPL Patentanwälte PartG mbB
(86) International application number: PCT/JP2023/006671
(87) International publication number: WO 2023/189068

(57) **Abstract**

An information processing apparatus includes: a generation unit that generates a projection pattern of light to be projected on an object using a phase modulation scheme; and an estimation unit that estimates distance information indicating a distance from an imaging device to the object on the basis of a captured image obtained by imaging the object on which the projection pattern generated by the generation unit is projected by the imaging device.

## Description

### Field

The present invention relates to an information processing apparatus, an information processing method, and an information processing program.

### Background

Conventionally, a distance measuring method for measuring a distance to an object is known. For example, as a distance measuring method, an active stereo method (also referred to as an active stereo method) is known. The active stereo method is a method of projecting a light pattern on an object, imaging the objects on which the patterns are projected by two left and right cameras, and measuring a distance from the camera to the object on the basis of two images obtained by imaging the objects on which the patterns are projected. As a technique related to the active stereo method, for example, a technique of projecting light patterns having a distribution of different intensities such as polka dots on an object is known.

### Citation List

### Patent Literature

Patent Literature 1: US 2018/0260623 A

### Summary

### Technical Problem

However, in the above-described conventional technology, only a light pattern having a distribution of different intensities is projected on the object, and the distance from the imaging device to the object cannot always be estimated with high accuracy.

Therefore, the present disclosure proposes an information processing apparatus, an information processing method, and an information processing program capable of estimating a distance from an imaging device to an object with high accuracy.

### Solution to Problem

To solve the above problem, an information processing apparatus includes: a generation unit that generates a projection pattern of light to be projected on an object using a phase modulation scheme; and an estimation unit that estimates distance information indicating a distance from an imaging device to the object on the basis of a captured image obtained by imaging the object on which the projection pattern generated by the generation unit is projected by the imaging device.

### Brief Description of Drawings

FIG. 1 is a diagram illustrating an outline of information processing according to an embodiment of the present disclosure.
FIG. 2 is a diagram illustrating a configuration example of an information processing apparatus according to the embodiment.
FIG. 3 is a diagram illustrating an example of a projection pattern according to the embodiment.
FIG. 4 is a flowchart illustrating an information processing procedure according to the embodiment.
FIG. 5 is a diagram illustrating an outline of information processing according to a first modification of the embodiment.
FIG. 6 is a diagram illustrating an outline of information processing according to a second modification of the embodiment.
FIG. 7 is a hardware configuration diagram illustrating an example of a computer that implements function of an information processing apparatus. Description of Embodiments

Hereinafter, embodiments of the present disclosure will be described in detail on the basis of the drawings. Note that, in the following embodiments, the same parts are denoted by the same reference numerals, and redundant description will be omitted.

### (Embodiment)

### [1. Introduction]

In the conventional active stereo method, a pattern (hereinafter, also referred to as a projection pattern) of light projected on an object to be measured (hereinafter, an object) is fixed. Therefore, the distance to an object to be measured and the measurement accuracy may vary depending on how the projection pattern hits the object. Furthermore, when matching is performed for each part between two images obtained by imaging each object on which the pattern is projected, there is a case where erroneous matching occurs due to the reflectance of the object and the influence of external light. Therefore, the conventional active stereo method has a limit in measurement accuracy.

On the other hand, the information processing apparatus according to the embodiment of the present disclosure freely changes the distribution of the light amount in the projection pattern and the density of the projection pattern using the phase modulation scheme. As a result, the information processing apparatus can generate an adaptive projection pattern according to the reflectance of the object and the shape of the object. Furthermore, the information processing apparatus estimates distance information indicating a distance from the imaging device to the object on the basis of an image obtained by imaging the object on which the adaptive projection pattern is projected by the imaging device. As a result, the information processing apparatus can prevent variations in the distance to the object to be measure and the measurement accuracy due to how the projection pattern hits the object. Furthermore, the information processing apparatus can prevent occurrence of erroneous matching due to the reflectance of the object and the influence of external light. Therefore, the information processing apparatus can estimate the distance from the imaging device to the object with high accuracy.

### [2. Overview of Information Processing]

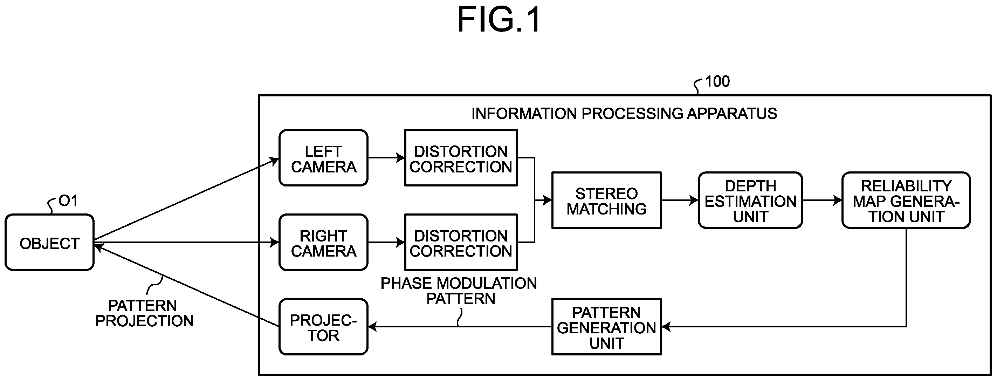

FIG. 1 is a diagram illustrating an outline of information processing according to an embodiment of the present disclosure. In FIG. 1, a pattern generation unit of an information processing apparatus 100 generates an initial projection pattern using, for example, the phase modulation scheme. For example, the pattern generation unit may generate a random pattern as an initial projection pattern. Furthermore, a projector included in the information processing apparatus 100 projects the initial projection pattern generated by the pattern generation unit on an object O1 (processing procedure 1).

Furthermore, a stereo camera included in the information processing apparatus 100 images the object O1 on which the initial projection pattern is projected by a left camera and a right camera. The stereo camera corrects distortion of each of captured images captured by the left camera and the right camera. Furthermore, the stereo camera performs matching on the two captured images after distortion is corrected (processing procedure 2).

Furthermore, a depth estimation unit of the information processing apparatus 100 estimates distance information (also referred to as depth information or a depth value) indicating a distance from the stereo camera to the object O1 on the basis of the two captured images after distortion is corrected. For example, the depth estimation unit estimates distance information on the basis of a distance between the two left and right cameras included in the stereo camera (distance between the focal points of the two cameras), the focal length of the stereo camera, and parallax between the two captured images. Subsequently, the depth estimation unit generates a depth image (also referred to as a distance measurement image or a depth map) in which distance information (depth value) is stored as a pixel value of each pixel in the captured image (processing procedure 3).

Furthermore, a reliability map generation unit of the information processing apparatus 100 calculates the reliability of the distance information (depth value) estimated by the depth estimation unit. The reliability is an index indicating the certainty of distance information (depth value) in each pixel of the captured image. Subsequently, the reliability map generation unit generates a reliability map that stores reliability as a pixel value of each pixel in the captured image (processing procedure 4) .

Furthermore, the pattern generation unit of the information processing apparatus 100 acquires the reliability map generated by the reliability map generation unit. The pattern generation unit specifies a low reliability pixel, which is a pixel having low reliability on the basis of the reliability map. For example, the pattern generation unit specifies a low reliability pixel with reliability that is equal to or less than a first threshold (for example, 60% or the like). Here, it is considered that the depth value can be correctly estimated in a portion with high reliability, whereas the depth value cannot be correctly estimated in a portion with low reliability for some reason. Furthermore, one of the causes that the depth value cannot be correctly estimated by the active stereo method is insufficient light amount (or excessive light amount) of the projector. In particular, in a case where a low reflection object having a low reflectance (or a high reflection object having a high reflectance) exists on a scene, it is known that the depth value of the portion cannot be correctly estimated when the entire light amount is uniform.

Therefore, in a case where a low reliability pixel is specified, the pattern generation unit determines whether or not the luminance value of the low reliability pixel is equal to or less than a first luminance value. When determining that the luminance value of the low reliability pixel is equal to or less than the first luminance value, the pattern generation unit determines that the object (which may be a partial region of the object O1) imaged in the low reliability pixel is a low reflection object having a low reflectance. Furthermore, when determining that the object imaged in the low reliability pixel is a low reflection object, the pattern generation unit generates a new projection pattern in which the amount of light projected to the object (low reflection object) imaged in the low reliability pixel is made higher than the amount of light projected to the object imaged in a pixel different from the low reliability pixel using the phase modulation scheme (processing procedure 5).

Furthermore, the projector included in the information processing apparatus 100 projects a new projection pattern generated by the pattern generation unit on an object O1 (processing procedure 6). For example, the information processing apparatus 100 repeats the above processing procedures 2 to 6 until a low reliability pixel is no longer detected from the reliability map.

As described above, for example, the information processing apparatus 100 can generate a new projection pattern in which the amount of light projected to the low reflection object imaged in the low reliability pixel having low luminance is increased, and project the new projection pattern. As a result, the information processing apparatus 100 can estimate the distance from the stereo camera to the low reflection object with high accuracy, for example.

### [3. Configuration of Information Processing Apparatus]

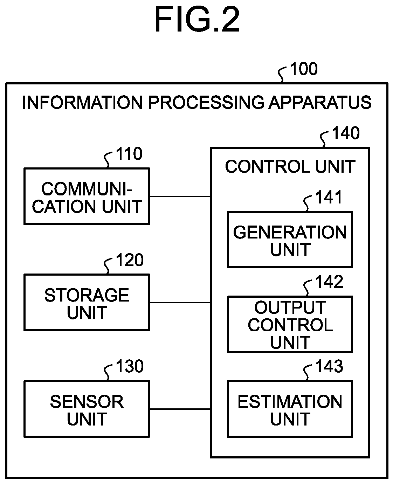

FIG. 2 is a diagram illustrating a configuration example of the information processing apparatus 100 according to the embodiment of the present disclosure. As illustrated in FIG. 2, the information processing apparatus 100 includes a communication unit 110, a storage unit 120, a sensor unit 130, and a control unit 140.

The communication unit 110 is implemented with, for example, a network interface card (NIC) or the like. Then, the communication unit 110 may be connected to a network in a wired or wireless manner, and transmit and receive information to and from another information processing apparatus, for example.

The storage unit 120 is implemented with, for example, a semiconductor memory element such as a random access memory (RAM) or a flash memory, or a storage device such as a hard disk or an optical disk. For example, the storage unit 120 stores information regarding the projection pattern generated by a generation unit 141.

The sensor unit 130 includes various sensors. Specifically, the sensor unit 130 includes a projector. For example, the sensor unit 130 may include a projection device (for example, a phase modulation device) that can freely change a focal length and a condensing characteristic of light using the phase modulation scheme as an example of the projector. Furthermore, the sensor unit 130 includes an imaging device. For example, the sensor unit 130 may include a stereo camera as an example of the imaging device. Note that, as an example of the imaging device, the sensor unit 130 may include a monocular camera instead of the stereo camera.

The control unit 140 is a controller, and is implemented by, for example, a central processing unit (CPU), a micro processing unit (MPU), an application specific integrated circuit (ASIC), a field programmable gate array (FPGA), or the like executing various programs (corresponding to an example of an information processing program) stored in a storage device inside the information processing apparatus 100 using a storage area such as a RAM as a work area. In the example illustrated in FIG. 2, the control unit 140 includes the generation unit 141, an output control unit 142, and an estimation unit 143.

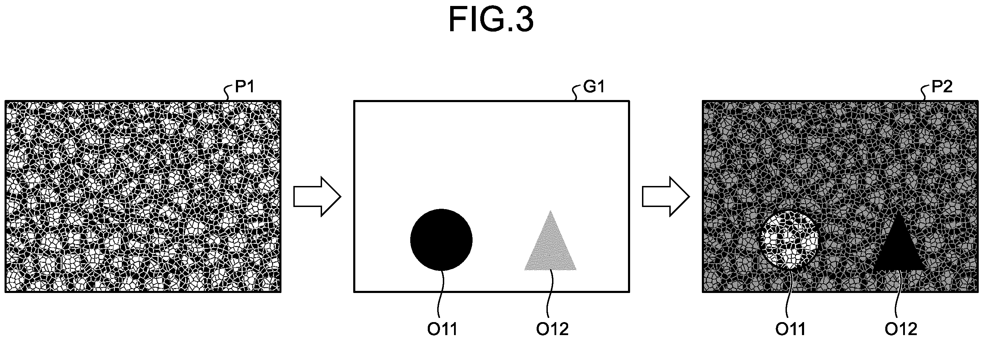

The generation unit 141 includes the pattern generation unit illustrated in FIG. 1. The generation unit 141 generates a projection pattern of light to be projected on an object using the phase modulation scheme. The generation unit 141 generates an initial projection pattern, for example, using the phase modulation scheme. FIG. 3 is a diagram illustrating an example of a projection pattern according to the embodiment of the present disclosure. The generation unit 141 may generate a random pattern P1 as illustrated on the left of FIG. 3 as an initial projection pattern.

The output control unit 142 controls the projector included in the sensor unit 130 so as to project the projection pattern generated by the generation unit 141 on the object. For example, the output control unit 142 controls the projector included in the sensor unit 130 so as to project the random pattern P1 generated by the generation unit 141 on the object. For example, the output control unit 142 controls the projector included in the sensor unit 130 so as to project the random pattern P1 to two objects O11 and O12 located in an actual scene G1 as illustrated in the center of FIG. 3.

The estimation unit 143 includes a depth estimation unit illustrated in FIG. 1. The estimation unit 143 acquires a captured image obtained by imaging an object on which the projection pattern generated by the generation unit 141 is projected by the imaging device. For example, the stereo camera of the sensor unit 130 images the object on which the initial projection pattern is projected by the left camera and the right camera. The stereo camera corrects distortion of each of captured images captured by the left camera and the right camera. Furthermore, the stereo camera performs matching on the two captured images after distortion is corrected. The estimation unit 143 acquires two captured images after distortion is corrected from the stereo camera. For example, the estimation unit 143 acquires two captured images obtained by imaging the two objects O11 and O12 on which the random pattern P1 generated by the generation unit 141 is projected by the stereo camera.

Subsequently, the estimation unit 143 estimates distance information indicating the distance from the imaging device to the object on the basis of the acquired captured image. For example, the estimation unit 143 estimates distance information on the basis of a distance between the two left and right cameras included in the stereo camera (distance between the focal points of the two cameras), the focal length of the stereo camera, and parallax between two captured images. Subsequently, the estimation unit 143 generates a depth image in which distance information (depth value) is stored as a pixel value of each pixel in the captured image on the basis of the estimated distance information.

Furthermore, the generation unit 141 includes a reliability map generation unit. For example, the generation unit 141 calculates the reliability of the distance information (depth value) estimated by the estimation unit 143. Subsequently, the generation unit 141 generates a reliability map that stores reliability as a pixel value of each pixel in the captured image.

Furthermore, the generation unit 141 specifies a low reliability pixel, which is a pixel having low reliability on the basis of the reliability map. For example, the generation unit 141 specifies a low reliability pixel with reliability that is equal to or less than a first threshold (for example, 60% or the like). Subsequently, in a case where a low reliable pixel is specified, the generation unit 141 determines whether or not the luminance value of the low reliability pixel is equal to or less than a first luminance value. When determining that the luminance value of the low reliability pixel is equal to or less than the first luminance value, the generation unit 141 determines that the object (which may be a partial region of the object) imaged in the low reliability pixel is a low reflection object having a low reflectance. Furthermore, when determining that the object imaged in the low reliability pixel is a low reflection object, the generation unit 141 generates, using the phase modulation scheme, a new projection pattern in which the amount of light projected to the object (low reflection object) imaged in the low reliability pixel is made higher than the amount of light projected to the object imaged in a pixel different from the low reliability pixel. For example, in the example illustrated in the center of FIG. 3, the generation unit 141 determines that the object O11 is a low reflection object. Furthermore, the generation unit 141 generates, using the phase modulation scheme, a new projection pattern P2 in which the amount of light projected to the object O11, which is a low reflection object, is made higher than the amount of light projected to a region other than the object O11, which is a low reflection object, in the actual scene G1 illustrated in the center of FIG. 3. As described above, in a case where the luminance value of the pixel corresponding to the low reliability pixel is equal to or less than the first luminance value, the generation unit 141 generates a new projection pattern in which the amount of light projected to the object imaged in the low reliability pixel is larger than the amount of light projected to the object imaged in the high reliability pixel, which is not the low reliability pixel.

Furthermore, in a case where a low reliable pixel is specified, the generation unit 141 determines whether or not the luminance value of the low reliability pixel is equal to or more than a second luminance value. For example, the second luminance value may be a value larger than the first luminance value. When determining that the luminance value of the low reliability pixel is equal to or more than the second luminance value, the generation unit 141 determines that the object (which may be a partial region of the object) imaged in the low reliability pixel is a high reflection object having a high reflectance. Furthermore, when determining that the object imaged in the low reliability pixel is a high reflection object, the generation unit 141 generates, using the phase modulation scheme, a new projection pattern in which the amount of light projected to the object (high reflection object) imaged in the low reliability pixel is made lower than the amount of light projected to the object imaged in a pixel different from the low reliability pixel. For example, in the example illustrated in the center of FIG. 3, the generation unit 141 determines that the object O12 is a high reflection object. Furthermore, the generation unit 141 generates, using the phase modulation scheme, a new projection pattern P2 in which the amount of light projected to the object O12, which is a high reflection object, is made lower than the amount of light projected to a region other than the object O12, which is a high reflection object, in the actual scene G1 illustrated in the center of FIG. 3. As described above, in a case where the luminance value of the pixel corresponding to the low reliability pixel is equal to or more than the second luminance value, the generation unit 141 generates a new projection pattern in which the amount of light projected to the object imaged in the low reliability pixel is lower than the amount of light projected to the object imaged in the high reliability pixel.

Furthermore, the estimation unit 143 estimates distance information on the basis of a new captured image obtained by imaging the object on which the new projection pattern generated by the generation unit 141 is projected by the imaging device. For example, the estimation unit 143 acquires two captured images obtained by imaging the two objects O11 and O12 on which the new projection pattern P2 generated by the generation unit 141 is projected by the stereo camera. Subsequently, the estimation unit 143 estimates distance information indicating the distance from the imaging device to the object on the basis of the acquired captured image. For example, the estimation unit 143 estimates distance information indicating respective distances from the stereo camera to the objects O11 and O12, on the basis of a captured image obtained by imaging the two objects O11 and O12 on which the new projection pattern P2 is projected.

### [4. Information Processing Procedure]

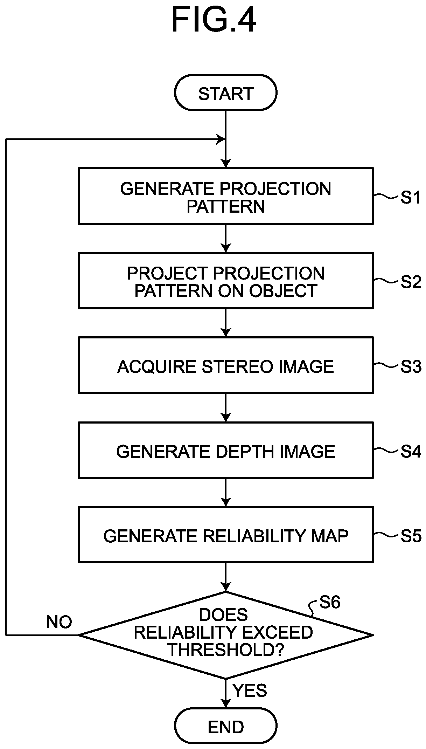

FIG. 4 is a flowchart illustrating an information processing procedure according to the embodiment of the present disclosure. The generation unit 141 of the information processing apparatus 100 generates a projection pattern of light to be projected on an object using the phase modulation scheme (Step S1). The projector included in the sensor unit 130 of the information processing apparatus 100 projects the projection pattern generated by the generation unit 141 on the object under the control of the output control unit 142 (Step S2). The estimation unit 143 of the information processing apparatus 100 acquires a stereo image from the stereo camera included in the sensor unit 130 (Step S3). Subsequently, the estimation unit 143 estimates distance information indicating the distance from the stereo camera to the object on the basis of the acquired stereo image. Subsequently, the estimation unit 143 generates a depth image on the basis of the estimated distance information (Step S4). Subsequently, the estimation unit 143 generates a reliability map on the basis of the generated depth image (Step S5). The generation unit 141 determines whether or not the reliability in each pixel of the reliability map generated by the estimation unit 143 exceeds a threshold (Step S6). When determining that the reliability in each pixel of the reliability map exceeds the threshold (Step S6; Yes), the generation unit 141 ends the process. On the other hand, when determining that the reliability in the predetermined pixel of the reliability map is equal to or less than the threshold (Step S6; No), the generation unit 141 generates a new projection pattern on the basis of the reliability in the reliability map (Step S1).

### [5. Modification]

The information processing apparatus 100 according to the above-described embodiment may be implemented in various different embodiments other than the above-described embodiment. Therefore, another embodiment of the information processing apparatus 100 will be described below. Note that the same parts as those in the embodiment are denoted by the same reference numerals, and the description thereof will be omitted.

### [5-1. First Modification]

In the above-described embodiment, the case where the information processing apparatus 100 generates a reliability map and generates a new projection pattern on the basis of the generated reliability map has been described. The first modification is different from the embodiment in that the information processing apparatus 100 estimates the three-dimensional shape of the object instead of generating the reliability map. Furthermore, the information processing apparatus 100 generates a new projection pattern on the basis of the estimated three-dimensional shape of the object. Note that description of contents overlapping with the embodiment will be omitted.

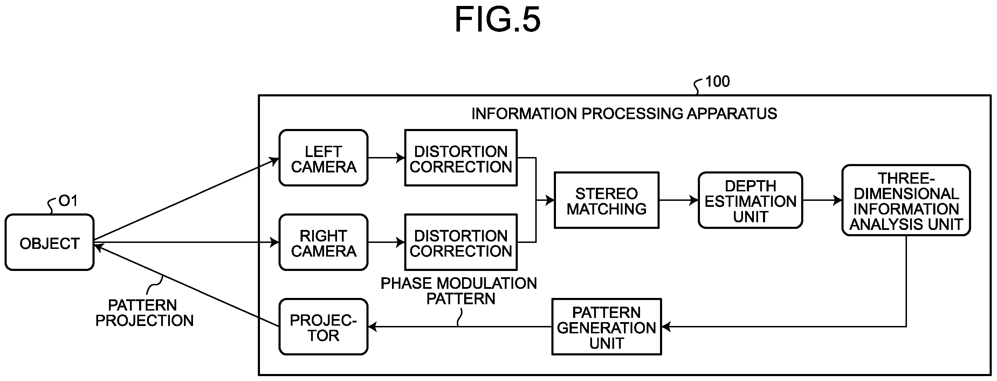

FIG. 5 is a diagram illustrating an outline of information processing according to a first modification of the embodiment of the present disclosure. FIG. 5 is different from FIG. 1 in that the information processing apparatus 100 includes a three-dimensional information analysis unit instead of the reliability map generation unit. Furthermore, in FIG. 5, the processing procedures 1 to 3 and 6 are the same as those in FIG. 1, and thus description thereof is omitted.

In FIG. 5, the three-dimensional information analysis unit of the information processing apparatus 100 estimates the three-dimensional shape of the object O1 on the basis of the distance information (depth value) estimated by the depth estimation unit (processing procedure 4A). The generation unit 141 illustrated in FIG. 2 includes the three-dimensional information analysis unit illustrated in FIG. 5. The object O1 is, for example, an artificial object such as a chair or a desk. Since the object O1 is an artificial object, the object O1 has a flat surface or a curved surface of a certain area, and the three-dimensional shape can be easily estimated. The generation unit 141 estimates the three-dimensional shape of the object O1 on the basis of the distance information (depth value) estimated by the estimation unit 143. For example, the generation unit 141 estimates a plane or a curved surface that fits the point group in the depth image generated by the estimation unit 143 using the least squares method.

Here, in general, it is known that a phenomenon that a part of the focus becomes loose or the density of a projection pattern is not uniform occurs depending on the three-dimensional shape of the object. For example, when a sphere is irradiated with a uniform projection pattern, since the vicinity of the center of the sphere is at a position close to the camera, the density of the projection pattern becomes low, and the focus position becomes close. On the other hand, since the end portion of the sphere is at a position far from the camera, the density of the projection pattern becomes high, and the focus position becomes far.

Therefore, the generation unit 141 estimates distance information indicating the distance from the imaging device to each position of the object on the basis of the three-dimensional shape of the object. Subsequently, using the phase modulation scheme, the generation unit 141 generates a new projection pattern in which the density of the projection pattern projected on each position (for example, a position in the vicinity of the center of the sphere) of the object at which the distance from the imaging device to the object is equal to or less than a first distance is higher than the density of the projection pattern projected on each position (for example, a position other than the vicinity of the center of the sphere) of the object at which the distance from the imaging device to the object exceeds the first distance (processing procedure 5A).

Furthermore, using the phase modulation scheme, the generation unit 141 generates a new projection pattern in which the density of the projection pattern projected on each position (for example, a position of the end portion of the sphere) of the object at which the distance from the imaging device to the object is equal to or more than a second distance is lower than the density of the projection pattern projected on each position (for example, the position other than the end portion of the sphere) of the object at which the distance from the imaging device to the object is less than the second distance (processing procedure 5A). For example, the second distance may be a distance larger than the first distance.

As described above, for example, the information processing apparatus 100 can estimate the three-dimensional shape of the object from the depth value, generate a new projection pattern in which the density of the projection pattern is changed according to the estimated three-dimensional shape, and project the new projection pattern. As a result, the information processing apparatus 100 can estimate the distance from the stereo camera to the object with high accuracy.

### [5-2. Second Modification]

In the above-described embodiment, the case where the information processing apparatus 100 estimates the distance information indicating the distance from the imaging device to the object on the basis of the captured image obtained by imaging the object on which the projection pattern including a specific pattern is projected by the imaging device has been described. In a second modification, the information processing apparatus 100 generates a flat pattern that is a uniform projection pattern not including a pattern and a specific pattern that is a projection pattern including a specific pattern. Then, a case where the information processing apparatus 100 estimates distance information indicating the distance from the imaging device to the object on the basis of a captured image obtained by imaging the object on which the flat pattern and the specific pattern are alternately projected in a time division manner by the imaging device will be described. Note that description of contents overlapping with the embodiment will be omitted.

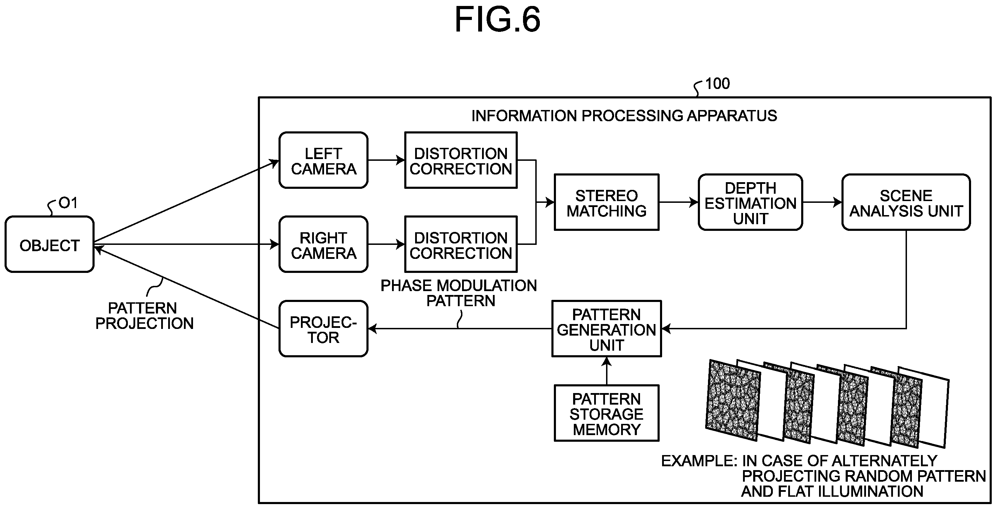

FIG. 6 is a diagram illustrating an outline of information processing according to the second modification of the embodiment of the present disclosure. FIG. 6 is different from FIG. 1 in that the information processing apparatus 100 includes a scene analysis unit instead of the reliability map generation unit. Here, the scene analysis unit in FIG. 6 corresponds to at least one of the reliability map generation unit in FIG. 1 or the three-dimensional information analysis unit in FIG. 5. Furthermore, FIG. 6 is different from FIG. 1 in that the information processing apparatus 100 includes a pattern storage memory. As illustrated in FIG. 6, the projector of the information processing apparatus 100 may project the calculated phase modulation pattern stored in advance in the pattern storage memory.

Here, in general, as a feature of a specific pattern (for example, a random pattern or the like) that is a projection pattern including a specific pattern, there is a point that it is difficult to estimate a depth value near the edge of an object while it is easy to estimate a depth value of the face of the object. On the other hand, flat irradiation (hereinafter, also referred to as a flat pattern), which is uniform light not including a pattern, is characterized in that it is easy to estimate the depth near the edge of the object while it is difficult to estimate the depth of the face of the object.

Therefore, for example, the generation unit 141 generates, using the phase modulation scheme, a flat pattern that is a uniform projection pattern not including a pattern and a specific pattern (for example, the adaptive projection pattern described in the embodiment, and the like) that is a projection pattern including a specific pattern. Furthermore, the projector included in the information processing apparatus 100 alternately projects the flat pattern and the specific pattern on the object O1 in a time division manner. The estimation unit 143 estimates distance information indicating the distance from the imaging device to the object on the basis of a captured image obtained by imaging the object by the imaging device, the flat pattern and the specific pattern generated by the generation unit 141 being alternately projected on the object in a time division manner.

As described above, for example, the information processing apparatus 100 can estimate the distance from the imaging device to the object with higher accuracy by irradiating the object with the adaptive projection pattern and the flat illumination described in the embodiment in a time division manner.

### [6. Effects]

As described above, the information processing apparatus 100 according to the embodiment or the modification of the present disclosure includes the generation unit 141 and the estimation unit 143. The generation unit 141 generates a projection pattern of light to be projected on an object using the phase modulation scheme. The estimation unit 143 estimates distance information indicating the distance from the imaging device to the object on the basis of a captured image obtained by imaging the object by the imaging device, the projection pattern generated by the generation unit 141 being alternately projected on the object in a time division manner.

As a result, the information processing apparatus 100 can estimate the distance from the imaging device to the object with high accuracy.

Furthermore, the generation unit 141 generates a new projection pattern on the basis of distance information in each pixel of the imaging region in which the object is imaged in the captured image. The estimation unit 143 estimates the distance information on the basis of a new captured image obtained by imaging the object on which the new projection pattern generated by the generation unit 141 is projected by the imaging device.

As a result, the information processing apparatus 100 can generate an adaptive projection pattern according to the reflectance of the object and the shape of the object. Furthermore, the information processing apparatus 100 estimates distance information indicating the distance from the imaging device to the object on the basis of an image obtained by imaging the object on which the adaptive projection pattern is projected by the imaging device. As a result, the information processing apparatus 100 can prevent variations in the distance to the object to be measure and the measurement accuracy due to how the projection pattern hits the object. Furthermore, the information processing apparatus 100 can prevent occurrence of erroneous matching due to the reflectance of the object and the influence of external light. Therefore, the information processing apparatus 100 can estimate the distance from the imaging device to the object with high accuracy.

Furthermore, the generation unit 141 generates a new projection pattern on the basis of reliability, which is an index indicating the certainty of distance information in each pixel of the imaging region.

As a result, the information processing apparatus 100 can generate, for example, an adaptive projection pattern according to the reflectance of the object on the basis of the reliability. Therefore, the information processing apparatus 100 can estimate the distance from the imaging device to the object with high accuracy.

Furthermore, the generation unit 141 generates a new projection pattern in which the amount of light projected to the object imaged in the high reliability pixel with reliability that exceeds first reliability is different from the amount of light projected to the object imaged in the low reliability pixel with reliability that is equal to or less than the first reliability.

As a result, the information processing apparatus 100 can generate, for example, an adaptive projection pattern according to the reflectance of the object on the basis of the degree of the reliability. Therefore, the information processing apparatus 100 can estimate the distance from the imaging device to the object with high accuracy.

Furthermore, the generation unit 141 generates a new projection pattern in which the amount of light projected to the object imaged in the low reliability pixel is higher than the amount of light projected to the object imaged in the high reliability pixel.

As a result, the information processing apparatus 100 can generate, for example, an adaptive projection pattern according to the reflectance of the object on the basis of the degree of the reliability. Therefore, the information processing apparatus 100 can estimate the distance from the imaging device to the object with high accuracy.

Furthermore, in a case where the luminance value of the pixel corresponding to the low reliability pixel is equal to or less than the first luminance value, the generation unit 141 generates a new projection pattern in which the amount of light projected to the object imaged in the low reliability pixel is higher than the amount of light projected to the object imaged in the high reliability pixel.

As a result, the information processing apparatus 100 can generate a new projection pattern in which the amount of light projected to the low reflection object imaged in the low reliability pixel having low luminance is increased, and project the new projection pattern, for example. Therefore, the information processing apparatus 100 can estimate the distance from the imaging device to the object with high accuracy.

Furthermore, the generation unit 141 generates a new projection pattern in which the amount of light projected to the object imaged in the low reliability pixel is lower than the amount of light projected to the object imaged in the high reliability pixel.

As a result, the information processing apparatus 100 can generate, for example, an adaptive projection pattern according to the reflectance of the object on the basis of the degree of the reliability. Therefore, the information processing apparatus 100 can estimate the distance from the imaging device to the object with high accuracy.

Furthermore, in a case where the luminance value of the pixel corresponding to the low reliability pixel is equal to or more than the second luminance value, the generation unit 141 generates a new projection pattern in which the amount of light projected to the object imaged in the low reliability pixel is lower than the amount of light projected to the object imaged in the high reliability pixel.

As a result, the information processing apparatus 100 can generate a new projection pattern in which the amount of light projected to the high reflection object imaged in the low reliability pixel having high luminance is reduced, and project the new projection pattern, for example. Therefore, the information processing apparatus 100 can estimate the distance from the imaging device to the object with high accuracy.

Furthermore, the generation unit 141 generates a new projection pattern on the basis of the three-dimensional shape of the object estimated on the basis of distance information in each pixel of the imaging region.

As a result, the information processing apparatus 100 can estimate the three-dimensional shape of the object from the depth value and generate an adaptive projection pattern according to the estimated three-dimensional shape, for example. Therefore, the information processing apparatus 100 can estimate the distance from the imaging device to the object with high accuracy.

Furthermore, the generation unit 141 generates a new projection pattern in which the density of the projection pattern projected on each position of the object is made different on the basis of distance information indicating the distance from the imaging device to each position of the object estimated on the basis of the three-dimensional shape of the object.

As a result, for example, the information processing apparatus 100 can estimate the three-dimensional shape of the object from the depth value, generate a new projection pattern in which the density of the projection pattern is changed according to the estimated three-dimensional shape, and project the new projection pattern. Therefore, the information processing apparatus 100 can estimate the distance from the imaging device to the object with high accuracy.

Furthermore, the generation unit 141 generates a new projection pattern in which the density of the projection pattern projected on each position of the object in which the distance from the imaging device to the object is equal to or less than the first distance is higher than the density of the projection pattern projected on each position of the object in which the distance from the imaging device to the object exceeds the first distance.

As a result, for example, the information processing apparatus 100 can estimate the three-dimensional shape of the object from the depth value, generate a new projection pattern in which the density of the projection pattern is changed according to the estimated three-dimensional shape, and project the new projection pattern. Therefore, the information processing apparatus 100 can estimate the distance from the imaging device to the object with high accuracy.

Furthermore, the generation unit 141 generates a new projection pattern in which the density of the projection pattern projected on each position of the object in which the distance from the imaging device to the object is equal to or more than the second distance is lower than the density of the projection pattern projected on each position of the object in which the distance from the imaging device to the object is less than the second distance.

As a result, for example, the information processing apparatus 100 can estimate the three-dimensional shape of the object from the depth value, generate a new projection pattern in which the density of the projection pattern is changed according to the estimated three-dimensional shape, and project the new projection pattern. Therefore, the information processing apparatus 100 can estimate the distance from the imaging device to the object with high accuracy.

Furthermore, the generation unit 141 generates a flat pattern that is a uniform projection pattern not including a pattern and a specific pattern that is a projection pattern including a specific pattern. The estimation unit 143 estimates distance information indicating the distance from the imaging device to the object on the basis of a captured image obtained by imaging the object by the imaging device, the flat pattern and the specific pattern generated by the generation unit 141 being alternately projected on the object in a time division manner.

As a result, for example, the information processing apparatus 100 can estimate the distance from the imaging device to the object with higher accuracy by irradiating the object with the adaptive projection pattern and the flat pattern in a time division manner.

### [7. Hardware Configuration]

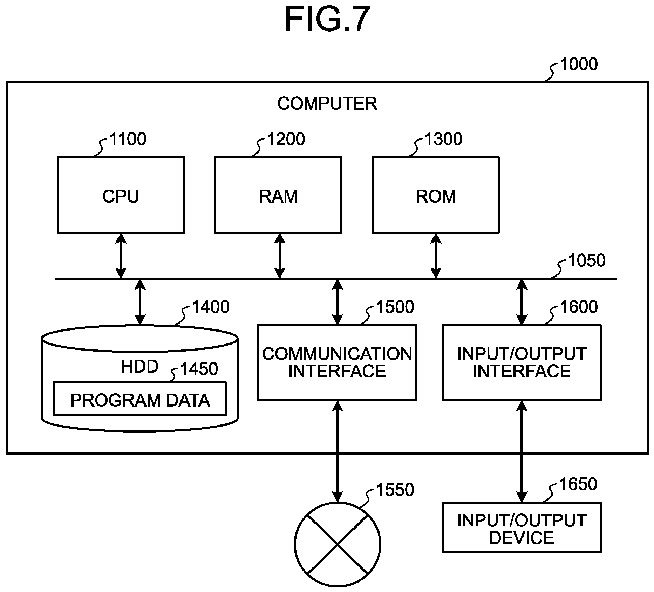

An information device such as the information processing apparatus 100 according to the above-described embodiment is reproduced by a computer 1000 having a configuration as illustrated in FIG. 7, for example. FIG. 7 is a hardware configuration diagram illustrating an example of the computer 1000 that reproduces functions of an information processing apparatus such as the information processing apparatus 100. Hereinafter, the information processing apparatus 100 according to the embodiment will be described as an example. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) to be executed by the CPU 1100 when the computer 1000 is activated, a program depending on the hardware of the computer 1000, and the like.

The HDD 1400 is a computer-readable recording medium in which a program executed by the CPU 1100, data used by the program, and the like are non-transiently recorded. Specifically, the HDD 1400 is a recording medium in which a program according to the present disclosure as an example of program data 1450 is recorded.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting the input/output device 1650 and the computer 1000. For example, the CPU 1100 receives data from an input device such as a keyboard and a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program or the like recorded in a predetermined recording medium (a medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing apparatus 100 according to the embodiment, the CPU 1100 of the computer 1000 reproduces the functions of the control unit 140 and the like by executing a program loaded on the RAM 1200. Furthermore, the HDD 1400 stores a program according to the present disclosure and various data. Note that the CPU 1100 reads the program data 1450 from the HDD 1400 and executes the program data, but as another example, these programs may be acquired from another device via the external network 1550.

In addition, the effects described in the present specification are merely illustrative or exemplary, and are not restrictive. That is, the technology according to the present disclosure can exhibit other effects obvious to those skilled in the art from the description of the present specification together with or instead of the above effects.

Note that the present technology can also have the following configurations.
(1) An information processing apparatus comprising:
   a generation unit that generates a projection pattern of light to be projected on an object using a phase modulation scheme; and
   an estimation unit that estimates distance information indicating a distance from an imaging device to the object on a basis of a captured image obtained by imaging the object on which the projection pattern generated by the generation unit is projected by the imaging device.
(2) The information processing apparatus according to (1),
   wherein the generation unit generates a new projection pattern on a basis of the distance information in each pixel of an imaging region in which the object is imaged in the captured image, and
   the estimation unit estimates the distance information on a basis of a new captured image obtained by imaging the object on which the new projection pattern generated by the generation unit is projected by the imaging device.
(3) The information processing apparatus according to (2),
   wherein the generation unit generates the new projection pattern on a basis of reliability that is an index indicating certainty of the distance information in each pixel of the imaging region.
(4) The information processing apparatus according to (3),
   wherein the generation unit generates the new projection pattern in which amount of light projected to the object imaged in a high reliability pixel with the reliability that exceeds first reliability is different from amount of light projected to the object imaged in a low reliability pixel with the reliability that is equal to or less than the first reliability.
(5) The information processing apparatus according to (4),
   wherein the generation unit generates the new projection pattern in which amount of light projected to the object imaged in the low reliability pixel is higher than amount of light projected to the object imaged in the high reliability pixel.
(6) The information processing apparatus according to (4) or (5),
   wherein in a case where a luminance value of a pixel corresponding to the low reliability pixel is equal to or less than a first luminance value, the generation unit generates the new projection pattern in which amount of light projected to the object imaged in the low reliability pixel is higher than amount of light projected to the object imaged in the high reliability pixel.
(7) The information processing apparatus according to any one of (4) to (6),
   wherein the generation unit generates the new projection pattern in which amount of light projected to the object imaged in the low reliability pixel is lower than amount of light projected to the object imaged in the high reliability pixel.
(8) The information processing apparatus according to any one of (4) to (7),
   wherein in a case where a luminance value of a pixel corresponding to the low reliability pixel is equal to or more than a second luminance value, the generation unit generates the new projection pattern in which amount of light projected to the object imaged in the low reliability pixel is lower than amount of light projected to the object imaged in the high reliability pixel.
(9) The information processing apparatus according to (2),
   wherein the generation unit generates the new projection pattern on a basis of a three-dimensional shape of the object estimated on a basis of the distance information in each pixel of the imaging region.
(10) The information processing apparatus according to (9),
   wherein the generation unit generates the new projection pattern in which density of the projection pattern projected on each position of the object is made different on a basis of distance information indicating a distance from the imaging device to each position of the object estimated on a basis of a three-dimensional shape of the object.
(11) The information processing apparatus according to (10),
   wherein the generation unit generates the new projection pattern in which density of the projection pattern projected on each position of the object at which a distance from the imaging device to the object is equal to or less than a first distance is higher than a density of the projection pattern projected on each position of the object at which the distance from the imaging device to the object exceeds the first distance.
(12) The information processing apparatus according to (10) or (11),
   wherein the generation unit generates the new projection pattern in which a density of the projection pattern projected on each position of the object at which the distance from the imaging device to the object is equal to or more than a second distance is lower than a density of the projection pattern projected on each position of the object at which the distance from the imaging device to the object is less than the second distance.
(13) The information processing apparatus according to any one of (1) to (12),
   wherein the generation unit generates a flat pattern that is a uniform projection pattern not including a pattern, and a specific pattern that is the projection pattern including a specific pattern, and
   the estimation unit estimates distance information indicating a distance from the imaging device to the object on a basis of a captured image obtained by imaging the object on which the flat pattern and the specific pattern generated by the generation unit are alternately projected in a time division manner by the imaging device.
(14) An information processing method executed by a computer, the method comprising:
   a generation step of generating a projection pattern of light to be projected on an object by using a phase modulation scheme; and
   an estimation step of estimating distance information indicating a distance from an imaging device to the object on a basis of a captured image obtained by imaging the object on which the projection pattern generated in the generation step is projected by the imaging device.
(15) An information processing program for causing a computer to execute:
   a generation procedure of generating a projection pattern of light to be projected on an object using a phase modulation scheme; and
   an estimation procedure of estimating distance information indicating a distance from an imaging device to the object on a basis of a captured image obtained by imaging the object on which the projection pattern generated in the generation procedure is projected by the imaging device.

### Reference Signs List

- 100: INFORMATION PROCESSING APPARATUS
- 110: COMMUNICATION UNIT
- 120: STORAGE UNIT
- 130: SENSOR UNIT
- 140: CONTROL UNIT
- 141: GENERATION UNIT
- 142: OUTPUT CONTROL UNIT
- 143: ESTIMATION UNIT

## Claims

1. An information processing apparatus comprising:
a generation unit that generates a projection pattern of light to be projected on an object using a phase modulation scheme; and
an estimation unit that estimates distance information indicating a distance from an imaging device to the object on a basis of a captured image obtained by imaging the object on which the projection pattern generated by the generation unit is projected by the imaging device.

2. The information processing apparatus according to claim 1,
wherein the generation unit generates a new projection pattern on a basis of the distance information in each pixel of an imaging region in which the object is imaged in the captured image, and
the estimation unit estimates the distance information on a basis of a new captured image obtained by imaging the object on which the new projection pattern generated by the generation unit is projected by the imaging device.

3. The information processing apparatus according to claim 2,
wherein the generation unit generates the new projection pattern on a basis of reliability that is an index indicating certainty of the distance information in each pixel of the imaging region.

4. The information processing apparatus according to claim 3,
wherein the generation unit generates the new projection pattern in which amount of light projected to the object imaged in a high reliability pixel with the reliability that exceeds first reliability is different from amount of light projected to the object imaged in a low reliability pixel with the reliability that is equal to or less than the first reliability.

5. The information processing apparatus according to claim 4,
wherein the generation unit generates the new projection pattern in which amount of light projected to the object imaged in the low reliability pixel is higher than amount of light projected to the object imaged in the high reliability pixel.

6. The information processing apparatus according to claim 5,
wherein in a case where a luminance value of a pixel corresponding to the low reliability pixel is equal to or less than a first luminance value, the generation unit generates the new projection pattern in which amount of light projected to the object imaged in the low reliability pixel is higher than amount of light projected to the object imaged in the high reliability pixel.

7. The information processing apparatus according to claim 4,
wherein the generation unit generates the new projection pattern in which amount of light projected to the object imaged in the low reliability pixel is lower than amount of light projected to the object imaged in the high reliability pixel.

8. The information processing apparatus according to claim 7,
wherein in a case where a luminance value of a pixel corresponding to the low reliability pixel is equal to or more than a second luminance value, the generation unit generates the new projection pattern in which amount of light projected to the object imaged in the low reliability pixel is lower than amount of light projected to the object imaged in the high reliability pixel.

9. The information processing apparatus according to claim 2,
wherein the generation unit generates the new projection pattern on a basis of a three-dimensional shape of the object estimated on a basis of the distance information in each pixel of the imaging region.

10. The information processing apparatus according to claim 9,
wherein the generation unit generates the new projection pattern in which density of the projection pattern projected on each position of the object is made different on a basis of distance information indicating a distance from the imaging device to each position of the object estimated on a basis of a three-dimensional shape of the object.

11. The information processing apparatus according to claim 10,
wherein the generation unit generates the new projection pattern in which density of the projection pattern projected on each position of the object at which a distance from the imaging device to the object is equal to or less than a first distance is higher than a density of the projection pattern projected on each position of the object at which the distance from the imaging device to the object exceeds the first distance.

12. The information processing apparatus according to claim 10,
wherein the generation unit generates the new projection pattern in which a density of the projection pattern projected on each position of the object at which the distance from the imaging device to the object is equal to or more than a second distance is lower than a density of the projection pattern projected on each position of the object at which the distance from the imaging device to the object is less than the second distance.

13. The information processing apparatus according to claim 1,
wherein the generation unit generates a flat pattern that is a uniform projection pattern not including a pattern, and a specific pattern that is the projection pattern including a specific pattern, and
the estimation unit estimates distance information indicating a distance from the imaging device to the object on a basis of a captured image obtained by imaging the object on which the flat pattern and the specific pattern generated by the generation unit are alternately projected in a time division manner by the imaging device.

14. An information processing method executed by a computer, the method comprising:
a generation step of generating a projection pattern of light to be projected on an object by using a phase modulation scheme; and
an estimation step of estimating distance information indicating a distance from an imaging device to the object on a basis of a captured image obtained by imaging the object on which the projection pattern generated in the generation step is projected by the imaging device.

15. An information processing program for causing a computer to execute:
a generation procedure of generating a projection pattern of light to be projected on an object using a phase modulation scheme; and
an estimation procedure of estimating distance information indicating a distance from an imaging device to the object on a basis of a captured image obtained by imaging the object on which the projection pattern generated in the generation procedure is projected by the imaging device.
